# EUROPEAN PATENT SPECIFICATION

(11) **EP 1 995 938 B1**
(45) Date of publication and mention of the grant of the patent: **01.10.2014**
(21) Application number: 07720335.4
(22) Date of filing: 06.03.2007
(51) Int. Cl.: H04L 12/24

(54) **METHOD AND COMMNUNICATION NETWORK FOR IMPLENMENTING SEPARATING TERMINAL SERVICE FROM NETWORK**
VERFAHREN UND KOMMUNIKATIONSNETZ ZUM IMPLEMENTIEREN EINER TRENNUNG EINES ENDGERÄTEDIENSTES VOM NETZ
PROCÉDÉ ET RÉSEAU DE COMMUNICATION PERMETTANT LA MISE EN OEUVRE D'UNE SÉPARATION ENTRE UN SERVICE DE TERMINAL ET LE RÉSEAU

(30) Priority: 13.03.2006 CN 200610034434
(43) Date of publication of application: 26.11.2008
(73) Proprietor: Huawei Technologies Co., Ltd., Longgang District, Shenzhen Guangdong 518129 (CN)
(72) Inventor: HUANG, Wei, Guangdong 518129 (CN); WANG, Feng, Guangdong 518129 (CN); ZHAO, Jun, Guangdong 518129 (CN); TAN, Peilong, Guangdong 518129 (CN); JIANG, Tao, Guangdong 518129 (CN)
(74) Representative: Maiwald Patentanwalts GmbH
(86) International application number: PCT/CN2007/000714
(87) International publication number: WO 2007/104235

(56) References cited:
- CN-A- 1 585 403
- CN-A- 1 643 888
- CN-A- 1 705 280
- "Open Service Access (OSA); Application Programming Interface (API); Part 10: Connectivity Manager SCF (Parlay 3); ETSI ES 201 915-10" ETSI STANDARDS, LIS, SOPHIA ANTIPOLIS CEDEX, FRANCE, vol. SPAN-12, no. V1.4.1, 1 July 2003 (2003-07-01), XP014004504 ISSN: 0000-0001

## Description

### Field of the Invention

The present invention relates to network and communication technologies, and in particular, to a method and communication network for separating terminal services from the network.

### Background of the Invention

In current communication networks, services are bundled with network devices. In other words, service implementation relies on support of network devices. When a new service feature needs to be implemented, it is necessary to change the hardware or upgrade the software of network devices, which greatly restricts the capability and speed of launching new services on a network and lacks flexibility of service provision. Moreover, a new service launched by a service provider, SP needs assurance of the network performance of a network operator, and requires the network operator to set the network parameters needed for launching the service, for example, quality of service, QoS parameters, and connection setup. Therefore, the response time of the network operator always affects the speed of launching a new service.

To avoid the restriction and impact of network devices on service launch, the separation of services from networks is necessary. The relation between services and networks lies in the combination of network device management and service management, and combination of services and transmission paths. Generally, service transmission needs QoS assurance of a network. A network needs to set up a transmission path with QoS assurance to transmit a service reliably. Therefore, the separation of services from networks not only necessitates the separation of services from network devices in the management layer, but also requires the service provision to be independent of network connections. In other words, before launching a service, an SP needs to only lease a network transmission path from a network operator and set forth the requirements on the transmission path (network connection parameters: bandwidth, peak cell rate, PCR, standard cell rate, SCR, delay requirement, and quantity of network connection paths), without the need of telling the network operator about the service to be launched. In this way, the launch of a service by the SP will not be restricted by the network of the network operator, and the SP can provide various services at discretion on the leased network. In other words, the SP applies to the network operator for the network connections and network parameter settings required for implementing the service before leasing the network, and the network operator sets the network connections and network parameters before service implementation. Therefore, the service implementation is independent of the network.

In the technical solution in the prior art, services are bundled with network devices, that is, services are implemented in the centralized network management mode. In the prior art, services and network devices are managed by the same network management system, NMS. When an operator provides a service for a user, the operator not only needs to set the service properties of the user, but also needs to set the corresponding network device parameters, for example, setup of network connections, and QoS parameters. Every time SP needs to carry out a new service, the user has to apply to the operator, which restricts the speed of launching a service. In a traditional network, a service corresponds to a connection. To launch a new service, an SP needs to set up a new connection and set the parameters required for supporting the service. Before the launch of a new service, it is uncertain which QoS support is required from the network. If the existing network supports the QoS required for the new service, the SP does not necessarily apply for further QoS.

Moreover, in a traditional network, services are bundled with network devices. To add a service, the network operator needs to change the hardware or upgrade the software of network devices. The device manufacturer is unwilling to open the source codes, so the network operator is unable to provide an open interface for the SP. Due to the lack of service openness, other operators such as SPs and Internet service providers, ISPs, are unable to launch distinctive services on the leased network. In some circumstances, in order to lauch new value added services, VASs, the network operator has to change or upgrade the network devices.

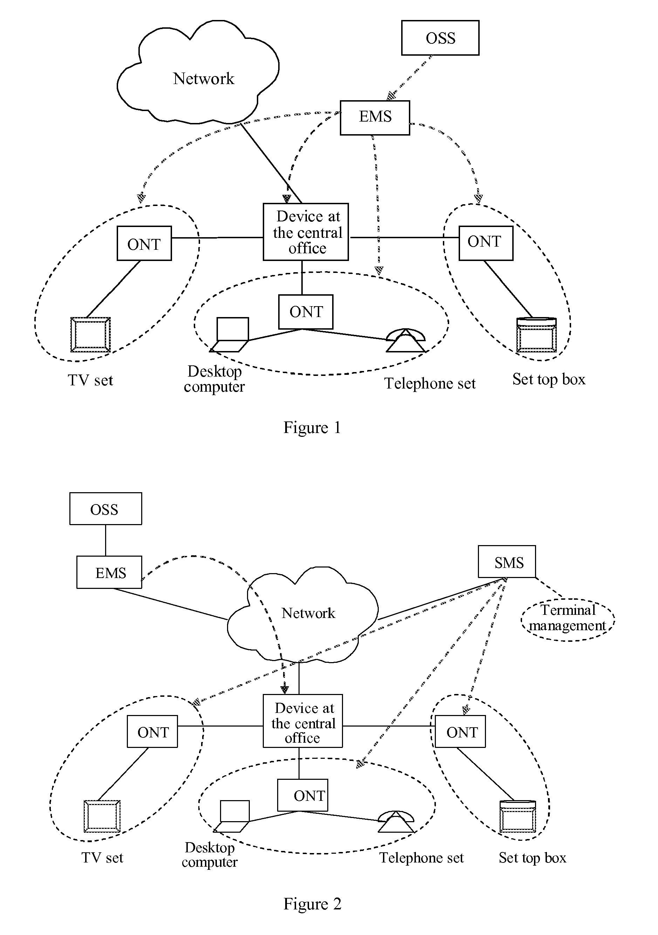

Figure 1 shows a networking diagram in the prior art which bundles services with network devices. In the figure, the dotted lines represent management paths. In a traditional communication network, network management includes network device management and service management, which are integrated rather than being independent. Moreover, network device management involves network terminal management.

After a user applies to a telecom operator for a service, the operator needs to issue a command to the element management system, EMS, through an operation support system, OSS. The user can use the service normally only after the operator sets the parameters and sets up the connections of network devices through the EMS.

The devices in a traditional network are generally developed according to service requirements. When a new service requirement arises, the hardware and software of the network devices need to be changed, which makes it slow to launch a new service. Moreover, the launch of services is restricted by network devices, which makes the service launch inflexible.

The bundling of services with network devices in the prior art restricts the service openness and the service development to some extent, and restricts the development of the network operation mode, namely, separation of a service provider from a network operator.

To provide new service features, the operator has to change or upgrade the network devices. This makes it difficult to implement interworking between a network device and different terminals, and restricts the development of diversified terminals and reduction of terminal costs. Different terminals are actually embodiments of different services. If services are bundled with the network, the network devices need to be changed before a terminal of a service type is added. Moreover, the terminals from each device manufacturer are bundled with the network devices. This makes it difficult to implement interworking between terminals from different manufacturers, restricts the standardization and unification of terminals, brings difficulty in reducing costs of terminals, and slows down the speed of launching new services.

In addition, "Open Service Access (OSA); Application Programming Interface (API); Part 10: Connectivity Manager SCF (Parlay) 3; ETSI ES201915-10" (ETSI STANDARDS, LIS, SOPHIA ANTIPOLIS CEDEX, FRANCE, vol. V1.4.1, 1 July 2003 (2003-07-01), XP014004504 ISSN:0000-0001) describes a specification for an API for OSA, which defines an architecture that enables application developers to make use of network functionality through an open standardized interface, and the document specifies the connectivity manager SCF aspects of the interface. Specifically, the enterprise operator can create a new virtual provisioned pipe in an existing virtual private network with the VPN interface, such a pipe is extended between specific SAPs/sites. Each such pipe is associated with QoS parameters identified by a specific DiffServ Codepoint. A packet that arrives at the SAP/site with a specific Codepoint is "directed" to the virtual provisioned pipe that supports the QoS parameters provisioned for this pipe.

### Summary of the Invention

An embodiment of the present invention provides a method and communication network for separating terminal services from the network, thus making it easier to provide and extend services, simplifying network management and enriching operation modes.

A method for separating service management from network management and separating services from network transmission paths provided in an embodiment of the present invention includes: configuring path parameters for network devices by a network management system, NMS, to set up network transmission paths, and configuring user service properties and network terminal parameters through a service management system, SMS, wherein the network devices are managed by the NMS, and network terminal management is separated from network device management, the network terminals are managed independently through the SMS, wherein the SMS provides an open system architecture, OSA, interface for a service provider, SP, so that the SP manages the user services for the network terminals through the SMS; identifying, by a network terminal, a type of a service, wherein the service is carried by a service stream out of a user terminal; tagging, by the network terminal, a service identifier to the service carried by the service stream according to service configuration parameters sent by the SMS, wherein the service identifier comprises service type information and service priority information; sending, by the network terminal, the service stream carrying the service tagged with the service identifier to a network edge device; receiving, by the network edge device, the service stream sent by the network terminal; and mapping, by the network edge device, the service carried by the service stream to a transmission path at a corresponding quality of service, QoS, level according to the service priority information of the service identifier.

A system for separating service management from network management and separating services from network transmission path provided in an embodiment of the present invention includes a user terminal, a network terminal, a network edge device, a network management system, NMS, and a service management system, SMS.

The NMS is adapted to maintain and manage network devices comprising the network edge device, configure path parameters for the network devices to set up network transmission paths and configure network connection parameters.

The SMS is adapted to configure service parameters and manage the network terminal, and provides an open system architecture, OSA, interface for a service provider, SP, to enable the SP manage the user services, wherein user service properties and network terminal parameters are configured through the SMS, network terminal management is separated from network device management, the network terminal is managed independently through the SMS.

The network terminal is adapted to identify a type of a service carried by a service stream that is out of the user terminal, tag a service identifier to the service according to service configuration parameters sent by the SMS, and send the service stream carrying the service tagged with the service identifier to the network edge device, wherein the service identifier comprises service type information and service priority information;

The network edge device in the communication network receives the service stream sent by the network terminal, and maps the service to a corresponding network transmission path to transmit the service according to the service priority information in the service identifier.

The technical solution of the present invention uses a network terminal or user terminal capable of identifying services to separate the service provision from the network and enable an SP to provide services quickly, thus simplifying the network management of a network operator and facilitating the service provision and extension. The SMS needs to manage each network terminal or user terminal, and the network terminals are managed by a stand-alone terminal management server. In this way, the network terminal management is separated from the existing network management, and network management does not cover management of network terminals, which simplifies the existing network management and enriches the operation modes.

### Brief Description of the Drawings

Figure 1 shows a networking diagram in the prior art which bundles services with network devices;
Figure 2 is a networking diagram in an embodiment of the present invention which separates services from the network;
Figure 3 shows the network architecture in an embodiment of the present invention;
Figure 4 shows the information format of a network terminal in an embodiment of the present invention; and
Figure 5 shows the information format of a network edge device in an embodiment of the present invention.

### Detailed Description of the Invention

The present invention is hereinafter described in detail with reference to embodiments and accompanying drawings.

A network device implements interconnection between network edge devices, and a network edge device implements access of a network terminal. Network terminals such as an optic network terminal, ONT, implement connection from a residential user terminal to a network.

To make the network independent of services, the network device must be simple and the network terminal must be intelligent, and the network device must be responsible only for setting up transmission paths and ensuring quality of the transmission paths. The network terminal must be capable of perceiving services and tagging a service identifier to the service of each user terminal. The network edge device such as an optic line terminal, OLT, maps each service to a transmission path at the corresponding QoS level according to the service priority in the network terminal service identifier. The network ensures transmission of services that require different QoS levels according to the QoS requirements of the transmission path.

The separation of services from the network needs separation in two layers:
1. separation of service management from network management; and
2. separation of services from network transmission paths.

Figure 2 shows a networking diagram which separates services from the network in the present invention. Separating services from the network means separating service management from network management and separating services from transmission paths. The most important factor that affects services is network terminals. The present invention separates network terminal management from network device management, and manages network terminals separately, so that the service management for network terminals is independent of the network. Moreover, the present invention enables a network terminal to identify services, and identifies different services through the network terminal, thus ensuring that each different service has a different transmission quality level in the network. The present invention adds a terminal service management system, SMS to manage network terminals.

### Details are described below:

### 1. Separation of service management from network management:

To separate service management from network management, two independent systems are needed: a network management system, NMS, and a service management system, SMS. The NMS is operated and managed by a network operator, and is responsible for maintaining and managing the network devices, setting up user paths and network transmission links, and configuring network connection parameters. An example is an element management system, EMS, shown in Figure 2. The SMS is maintained by an operator, but provides an open management interface for a service provider, SP, for example, an open system architecture, OSA, interface. The SP can control the network devices through an open interface according the requirements for launching new services, and set the required network parameters and network resources. The SP configures and manages the user services for the relevant network terminals through the SMS shown in Figure 2. The SMS exchanges information with the NMS, for example, service use information and charge information.

### 2. Separation of services from network transmission paths:

Provision of user services largely depends on the capabilities of network terminals in supporting the services. To separate services from the network, network terminal management needs to be separated from network device management, and the network terminals need to be managed independently through a stand-alone entity or part of the SMS. This enhances the openness of network terminals, and enables network terminals to provide services more flexibly and makes the service provision simpler and more convenient.

In a traditional network, for each new service launched, a corresponding end-to-end connection needs to be set up, so that each service corresponds to a network transmission path exactly, and the service implementation needs support of network devices. The present invention separates services from the network, so that a service does not necessarily correspond to a network connection exactly, and the SP can launch various services only by leasing the network of the operator.

For the purpose of separating services from the network, services must be independent of connection setup. Services need to be identified and separated at the network edge, and the network terminals perceive the services, identify different types of services and tag a service identifier to each service. A service identifier includes the service type information and the service priority information. For example, service type "01" indicates a voice service, with the priority "1" which indicates the highest priority; service type "02" indicates a streaming media service, with the priority "2" which indicates the second highest priority; service type "03" indicates a data service, with the priority "03" which indicates a medium priority. A network terminal needs to be capable of identifying a service. According to the priority in the service identifier of the network terminal, the network edge device maps the network terminal service to a preset end-to-end connection of the corresponding QoS to separate the service from the network transmission path.

The operator provides a physical transmission path for a user, and the user carries out multiple services on the physical transmission path. Each service requires a different QoS level, so the QoS needs to be differentiated between different services on a physical path. Therefore, a virtual path identifier is used to identify the QoS. For example, a virtual local area network, VLAN, tag is used to identify the virtual path. The network transmission path of the user terminal is a virtual transmission path, and the user need to apply to the network operator for the transmission path beforehand. According to the user requirement, the network operator sets up one or more end-to-end connections. When setting up a connection, the network operator does not need to know the service transmitted on the transmission path, and only needs to set up one or more end-to-end connections according to the QoS requirements put forward by the user.

According to the user service provision requirements, the SP manages the services and configures the service parameters for a network terminal through the SMS. According to the service identifier parameters sent by the SMS, the network terminal tags a service identifier to each different service stream of the user terminal. The network edge device performs scheduling for different services, and maps a service to a network transmission path according to the service type to implement transmission of user services. For example, the SP maps a video service to a path of the highest priority for transmitting as required by the user. When the user needs to send an urgent and important big data file, the SP can tag a service identifier of the highest priority to the data service as required by the user, and the ONT identifies the service according to the service type parameters sent by the service management server; and the network edge device maps the service to the transmission path of a high priority for transmitting according to the priority identifier in the service identifier.

The present invention separates services from the network, thus increasing the flexibility of service provision; and the service management for network terminals can be handled by the SP, thus simplifying the network management of the network operator.

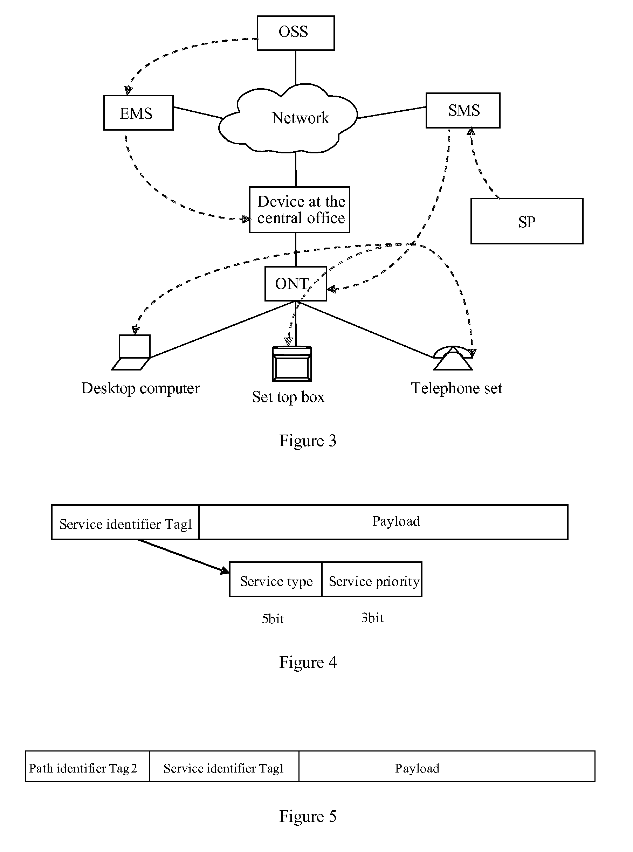

The present invention is described in detail below with examples:
As shown in Figure 3, the whole network includes two parts:
   1. Network device, and network terminal; and
   2. NMS and SMS.

The NMS includes an operation support system, OSS, and an element management system, EMS. The NMS is responsible for setting up a network transmission path. The SMS is responsible for configuring services and managing network terminals. The SMS provides an OSA interface for the SP so that the SP can manage the user services in a designated range.

First, the user applies to the telecom operator for a path for accessing the network. Then the network operator sends the corresponding information to the EMS through the OSS as required by the user. The EMS configures the corresponding path parameters for the network devices, thus setting up a network transmission path for the user. Meanwhile, the user needs to apply to the SP for a service, and the SP configures the user service properties and network terminal parameters through the SMS, and activates the service.

After the user terminal is authenticated and activated, the terminal finds the terminal service and the terminal service management server according to the uniform resource locator, URL, configured by the user and the transmission path set up beforehand. The service management server configures the service parameters for a network terminal according to the terminal identifier and the user identifier, and tags a service identifier to each service of the user through the network terminal according to the service requirements of the user. For example, a different service identifier is tagged to different service streams out of user terminals such as a desktop computer, a set top box, a phone set, and a TV set. Figure 4 shows the information format of a network terminal, in which the service identifier "Tag 1" includes the service type and service priority.

A network terminal is different from a user terminal. A network terminal is part of a network device, and is provided by a telecom equipment manufacturer and maintained and managed by a network operator. It is similar to a gateway device in a residential network. A user terminal is provided by a home appliance manufacturer, and is not maintained or managed by a network operator. The present invention uses a network terminal to identify services, and a network edge device adds a path identifier to identify the network QoS.

A network terminal such as an ONT implements service identification, and identifies the service type of the service carried in a service stream such as voice service, data service, and video service. According to the service type, the network terminal identifies the corresponding priority. The network edge device maps each different service to a different network transmission path according to the priority in the service identifier, adds the identifier of the network transmission path, for example, a VC connection identifier or a multi-protocol label switching, MPLS, identifier of the asynchronous transfer mode, ATM, and sends the service to the network for transmitting. The information format of the network edge device is shown in Figure 5. The path identifier "Tag 2" includes the path priority information.

After a service is added or modified, the user only needs to add or modify the service identifier, without the need of changing the existing network connection properties, which makes the service provision independent of the network.

In this embodiment, the service identifier is tagged by a network terminal. In practice, the service identifier may be tagged by a user terminal, if the user terminal is capable of identifying different services and is managed by a terminal server.

As shown in Figure 3, the embodiment of the present invention not only provides a method for separating terminal services from the network, but also provides a communication network, which includes an NMS and an SMS. The NMS maintains and manages network devices; sets up user paths and network transmission links, and configures network connection parameters. The SMS configures services and manages network terminals or user terminals. A network terminal or user terminal is capable of identifying services, and tags a service identifier to each terminal service according to the service configuration parameters sent by the SMS. A network edge device identifies transmission paths, and maps a service to a network transmission path at the corresponding QoS level set up by the NMS according to the service priority in the service identifier, and selects a transmission path at the proper QoS level for transmitting the service according to the service requirements. The NMS includes an OSS and an EMS and the SMS provides an open service management interface.

Although the invention has been described through some exemplary embodiments, the invention is not limited to such embodiments. It is apparent that those skilled in the art can make various modifications and variations to the invention without departing from the scope of the invention. The invention is intended to cover the modifications and variations provided that they fall in the scope of protection defined by the following claims or their equivalents.

## Claims

1. A method for separating service management from network management and separating services from network transmission paths, comprising:
configuring path parameters for network devices by a network management system, NMS, to set up network transmission paths, and configuring user service properties and network terminal parameters through a service management system, SMS, wherein the network devices are managed by the NMS, and network terminal management is separated from network device management, the network terminals are managed independently through the SMS, wherein the SMS provides an open system architecture, OSA, interface for a service provider, SP, so that the SP manages the user services for the network terminals through the SMS;
identifying, by a network terminal, a type of a service, wherein the service is carried by a service stream out of a user terminal;
tagging, by the network terminal, a service identifier to the service carried by the service stream according to service configuration parameters sent by the SMS, wherein the service identifier comprises service type information and service priority information;
sending, by the network terminal, the service stream carrying the service tagged with the service identifier to a network edge device;
receiving, by the network edge device, the service stream sent by the network terminal; and
mapping, by the network edge device, the service carried by the service stream to a transmission path at a corresponding quality of service, QoS, level according to the service priority information of the service identifier.

2. The method of claim 1, further comprising: setting, by the NMS, network transmission paths at different QoS levels.

3. The method of claim 1 or 2, wherein the network edge device is an optical line terminal, and the network terminal is an optical network terminal, the SMS is independently from the NMS.

4. A system for separating service management from network management and separating services from network transmission paths, comprising a user terminal, a network terminal, a network edge device, a network management system, NMS, and a service management system, SMS, **characterized in that**:
the NMS is adapted to maintain and manage network devices comprising the network edge device, configure path parameters for the network devices to set up network transmission paths, and configure network connection parameters;
the SMS is adapted to configure service parameters and manage the network terminal, and provides an open system architecture, OSA, interface for a service provider, SP, to enable the SP manage the user services, wherein user service properties and network terminal parameters are configured through the SMS, network terminal management is separated from network device management, the network terminal is managed independently through the SMS; and
the network terminal is adapted to identify a type of a service carried by a service stream that is out of the user terminal, tag a service identifier to the service according to service configuration parameters sent by the SMS, and send the service stream carrying the service tagged with the service identifier to the network edge device, wherein the service identifier comprises service type information and service priority information;
the network edge device is adapted to receive the service stream sent by the network terminal, and map the service carried by the service stream to a corresponding network transmission path according to the service priority information of the service identifier.

5. The system of claim 4, wherein the network edge device is an optical line terminal, and the network terminal is an optical network terminal.

6. The system of claim 4 or 5, wherein the NMS comprises an operation support system, OSS, and an element management system, EMS.

## Patentansprüche

1. Verfahren zum Trennen von Dienstverwaltung von Netzwerkverwaltung und Trennen von Diensten von Netzwerk-Übertragungswegen, umfassend:
Konfigurieren von Wegparametern für Netzwerkvorrichtungen durch ein Netzwerkverwaltungssystem, NMS, zum Einrichten von Netzwerk-Übertragungswegen und Konfigurieren von Benutzerdiensteigenschaften und Netzwerkendgerät-Parametern durch ein Dienstverwaltungssystem, SMS, wobei die Netzwerkvorrichtungen durch das NMS verwaltet werden und Netzwerkendgeräte-Verwaltung von Netzwerkvorrichtung-Verwaltung getrennt ist, wobei die Netzwerkendgeräte unabhängig durch das SMS verwaltet werden, wobei das SMS eine Schnittstelle einer Architektur eines offenen Systems, OSA, für einen Dienstanbieter, SP, bereitstellt, so dass der SP die Benutzerdienste für die Netzwerkendgeräte durch das SMS verwaltet;
Identifizieren, durch ein Netzwerkendgerät, eines Diensttyps, wobei der Dienst von einem Dienststream aus einem Benutzerendgerät heraus getragen wird;
Markieren, durch das Netzwerkendgerät, des Dienstes, der gemäß den von dem SMS gesandten Dienstkonfigurationsparametern von dem Dienststream getragen wird, mit einer Dienstkennung, wobei die Dienstkennung Diensttyp-Informationen und Dienstpriorität-Informationen umfasst;
Senden, durch das Netzwerkendgerät, des Dienststreams, der den mit der Dienstkennung markierten Dienst trägt, zu einer Netzwerkrandvorrichtung;
Empfangen, durch die Netzwerkrandvorrichtung, des von dem Netzwerkendgerät gesandten Dienststreams; und
Abbilden, durch die Netzwerkrandvorrichtung, des von dem Dienststream getragenen Dienstes auf einen Übertragungsweg bei einem korrespondierenden Niveau der Dienstgüte, QoS, gemäß den Dienstpriorität-Informationen der Dienstkennung.

2. Verfahren nach Anspruch 1, ferner umfassend: Einrichten, durch das NMS, von Netzwerkübertragungswegen bei verschiedenen QoS-Niveaus.

3. Verfahren nach Anspruch 1 oder 2, wobei die Netzwerkrandvorrichtung ein Endgerät einer optischen Leitung ist und das Netzwerkendgerät ein Endgerät eines optischen Netzwerks ist, das SMS unabhängig von dem NMS ist.

4. System zum Trennen von Dienstverwaltung von Netzwerkverwaltung und Trennen von Diensten von Netzwerk-Übertragungswegen, umfassend ein Benutzerendgerät, ein Netzwerkendgerät, eine Netzwerkrandvorrichtung, ein Netzwerkverwaltungssystem, NMS, und ein Dienstverwaltungssystem, SMS, **dadurch gekennzeichnet, dass**:
das NMS angepasst ist zum Erhalten und Verwalten von Netzwerkvorrichtungen, umfassend die Netzwerkrandvorrichtung, Konfigurieren von Wegparametern für die Netzwerkvorrichtungen, um Netzwerk-Übertragungswege einzurichten, und Konfigurieren von Netzwerk-Verbindungsparametern;
das SMS angepasst ist zum Konfigurieren von Dienstparametern und Verwalten des Netzwerkendgeräts und eine Schnittstelle einer Architektur eines offenen Systems, OSA, für einen Dienstanbieter, SP, bereitstellt, um den SP in die Lage zu versetzen, die Benutzerdienste zu verwalten, wobei die Diensteigenschaften und Netzwerkendgerät-Parameter durch das SMS konfiguriert werden, Netzwerkendgerätverwaltung von Netzwerkvorrichtungsverwaltung getrennt ist, das Netzwerkendgerät durch das SMS unabhängig verwaltet wird; und
das Netzwerkendgerät angepasst ist zum Identifizieren eines Diensttyps, der von einem Dienststream aus dem Benutzerendgerät heraus getragen wird, Markieren des Dienstes gemäß den von dem SMS gesandten Dienstkonfigurationsparametern mit einer Dienstkennung und Senden des Dienststreams, der den mit der Dienstkennung markierten Dienst trägt, zu der Netzwerkrandvorrichtung, wobei die Dienstkennung Diensttyp-Informationen und Dienstpriorität-Informationen umfasst;
die Netzwerkrandvorrichtung angepasst ist zum Empfangen des von dem Netzwerkendgerät gesandten Dienststreams und Abbilden des von dem Dienststream getragenen Dienstes auf einen korrespondierenden Netzwerk-Übertragungsweg gemäß den Dienstpriorität-Informationen der Dienstkennung.

5. System nach Anspruch 4, wobei die Netzwerkrandvorrichtung ein Endgerät einer optischen Leitung ist und das Netzwerkendgerät ein Endgerät eines optischen Netzwerks ist.

6. System nach Anspruch 4 oder 5, wobei das NMS ein Operationsunterstützungssystem, OSS, und ein Elementverwaltungssystem, EMS, umfasst.

## Revendications

1. Procédé destiné à séparer la gestion de services de la gestion de réseaux et séparer les services des trajets de transmission de réseau, comprenant :
la configuration de paramètres de trajet pour des dispositifs de réseau par un système de gestion de réseau, NMS (Network Management System), afin d'établir des trajets de transmission de réseau, et la configuration de propriétés de services utilisateurs et de paramètres de terminaux de réseau au moyen d'un système de gestion de services, SMS (Service Management System), dans lequel les dispositifs de réseau sont gérés par le NMS, et la gestion de terminaux de réseau est séparée de la gestion de dispositifs de réseau, les terminaux de réseau sont gérés indépendamment au moyen du SMS, dans lequel le SMS utilise une interface d'architecture système ouverte, OSA (Open System Architecture), pour un fournisseur de services, SP (Service Provider), de manière à ce que le SP gère les services utilisateurs pour les terminaux de réseau au moyen du SMS ;
l'identification, par un terminal de réseau, du type d'un service, dans lequel le service est acheminé par un flux de service à partir d'un terminal utilisateur ;
le marquage, par le terminal de réseau, au moyen d'un identifiant de service, du service acheminé par le flux de service conformément à des paramètres de configuration de service envoyés par le SMS, dans lequel l'identifiant de service comprend des informations de type de service et des informations de priorité du service ;
l'envoi, par le terminal de réseau, du flux de service acheminant le service marqué par l'identifiant de service à un dispositif de bord de réseau ;
la réception, par le dispositif de bord de réseau, du flux de service envoyé par le terminal de réseau ; et
la mise en correspondance, par le dispositif de bord de réseau, du service acheminé par le flux de service avec un trajet de transmission à un niveau de qualité de service, QoS (Quality of Service), correspondant, conformément aux informations de priorité de service de l'identifiant de service.

2. Procédé selon la revendication 1, comprenant en outre : le réglage, par le NMS, de trajets de transmission de réseau à différents niveaux de QoS.

3. Procédé selon la revendication 1 ou 2, dans lequel le dispositif de bord de réseau est un terminal de ligne optique, et le terminal de réseau est un terminal de réseau optique, le SMS est indépendant du NMS.

4. Système destiné à séparer la gestion de services de la gestion de réseaux et à séparer les services des trajets de transmission de réseau, comprenant un terminal utilisateur, un terminal de réseau, un dispositif de bord de réseau, un système de gestion de réseau, NMS, et un système de gestion de service, SMS, **caractérisé en ce que** :
le NMS est apte à maintenir et à gérer des dispositifs de réseau comprenant le dispositif de bord de réseau, à configurer des paramètres de trajets pour les dispositifs de réseau afin d'établir des trajets de transmission de réseau, et à configurer des paramètres de connexion au réseau ;
le SMS est apte à configurer des paramètres de service et à gérer le terminal de réseau, et fournit une interface d'architecture système ouverte, OSA (Open System Architecture), pour un fournisseur de service, SP (Service Provider), afin de permettre au SP de gérer les services utilisateurs, dans lequel des propriétés de services utilisateurs et des paramètres de terminaux de réseau sont configurés par l'intermédiaire du SMS, la gestion de terminaux de réseau est séparée de la gestion de dispositifs de réseau, le terminal de réseau est géré indépendamment au moyen du SMS ; et
le terminal de réseau est apte à identifier le type d'un service acheminé par un flux de service à partir du terminal utilisateur, marquer au moyen d'un identifiant de service le service conformément à des paramètres de configuration de service envoyés par le SMS, et envoyer le flux de service acheminant le service marqué par l'identifiant de service au dispositif de bord de réseau, dans lequel l'identifiant de service comprend des informations de type de service et des informations de priorité de service ;
le dispositif de bord de réseau est apte à recevoir le flux de service envoyé par le terminal de réseau, et à mettre en correspondance le service acheminé par le flux de service avec un trajet de transmission de réseau correspondant conformément aux informations de priorité de service de l'identifiant de service.

5. Système selon la revendication 4, dans lequel le dispositif de bord de réseau est un terminal de ligne optique, et le terminal de réseau est un terminal de réseau optique.

6. Système selon la revendication 4 ou 5, dans lequel le NMS comprend un système de support d'exploitation, OSS (Operation Support System), et un système de gestion d'éléments, EMS (Element Management System).
